# EUROPEAN PATENT APPLICATION

(11) **EP 4 742 208 A1**
(43) Date of publication of application: **13.05.2026**
(21) Application number: 25208552.7
(22) Date of filing: 14.10.2025
(51) Int. Cl.: G08B 25/14

(54) **OPERATIONAL INFORMATION OF A FIRE DEVICE**

(30) Priority: 06.11.2024 US 202418938698
(71) Applicant: Honeywell International Inc., Charlotte, NC 28202 (US)
(72) Inventor: GIRISH, Jangam Gangadharam, Charlotte, 28202 (US); DUGE, Sudeep Jayakumar, Charlotte, 28202 (US); KADDI, Vikranth Ashok, Charlotte, 28202 (US); TRIPATHI, Sameer, Charlotte, 28202 (US)
(74) Representative: Haseltine Lake Kempner LLP

(57) **Abstract**

Devices, systems, and methods for operational information from a fire device are described herein. In some examples, one or more embodiments include a memory and a processor to execute instructions stored in the memory to receive an input query for operational information for the fire device, provide the input query to a small language model associated with the fire device and trained to provide information about the fire device, and generate, using the small language model, a response to the input query including the operational information.

## Description

### Technical Field

The present disclosure relates to devices, systems, and methods for operational information of a fire device.

### Background

Facilities, such as commercial facilities, office buildings, hospitals, campuses (e.g., including buildings and outdoor spaces), and the like, may have an event detection system that can be triggered during an event, such as an emergency situation (e.g., a fire) to warn occupants to evacuate. Such an event detection system may include an alarm system having a control panel and a number of event devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of event devices may provide a notification of the event to the occupants of the facility via alarms and/or other mechanisms.

### Brief Description of the Drawings

Figure 1 is an example of a system for operational information from a fire device, in accordance with one or more embodiments of the disclosure.
Figure 2 illustrates an example of training a small language model and a large language model, in accordance with one or more embodiments of the disclosure.
Figure 3 illustrates an example of an input query being provided to a small language model and/or a large language model, in accordance with one or more embodiments of the disclosure.
Figure 4 is an example of a fire device for operational information from a fire device, in accordance with one or more embodiments of the disclosure.

### Detailed Description

Devices, systems, and methods for operational information from a fire device are described herein. In some examples, one or more embodiments include a memory and a processor to execute instructions stored in the memory to receive an input query for operational information for the fire device, provide the input query to a small language model associated with the fire device and trained to provide information about the fire device, and generate, using the small language model, a response to the input query including the operational information.

A facility can utilize an event detection system in order to warn occupants of the facility of an emergency event, such as a fire. An event detection system can be a system of devices that operate to collect information about a facility and provide the collected information for analysis. Such an event detection system can also take actions based on the collected information, such as providing an audible and/or visible warning in an emergency event. For example, the event detection system can utilize event devices to warn occupants of an emergency event occurring in a space, such as a fire. As used herein, the term "event device" refers to a device that can receive an input relating to an event and/or generate an output relating to an event. Such event devices can be a part of the event detection system of a space in a facility/in the facility at large and can include devices such as fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of event devices. Such event devices may also include self-test capabilities.

In a case where a query about a fire device and/or an event device associated with the fire device occurs, technical support is normally involved to determine a response to the query. For example, if a malfunction with the fire device occurs, a query may include a request as to why the malfunction occurred. Technical support may be contacted in order to troubleshoot the malfunction to determine the cause of and solution for fixing the malfunction.

Determining the response to the query may involve technical review and/or analysis of fire device operational data. For example, a technical support person may have to manually review event logs, diagnostic data, configuration file information, source code information, etc. in order to determine a response to a particular query about the fire device.

However, the technical support person may not be located in a same geographical area as the facility and/or the event system. Due to these geographical limitations, meetings between the technical support person and personnel on-site at the facility having the event system may be difficult because of time zone differences.

Operational information of a fire device, according to the disclosure, can allow for a user to provide an input query for operational information about a fire device. The fire device can include a trained small language model that can generate a response to the input query including the operational information. Utilizing the small language model can allow for the user to easily determine operational information about the fire device, allowing the user to more easily troubleshoot technical issues with the fire device and/or determine whether to take steps to remedy a predicted technical issue without having to manually review technical data for the fire device, as compared with previous approaches. Additionally, the small language model can be continuously trained utilizing data logged by the fire device, allowing for the small language model to adapt as operating conditions change throughout the life cycle of the fire device. Accordingly, technical support time and efforts can be reduced as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

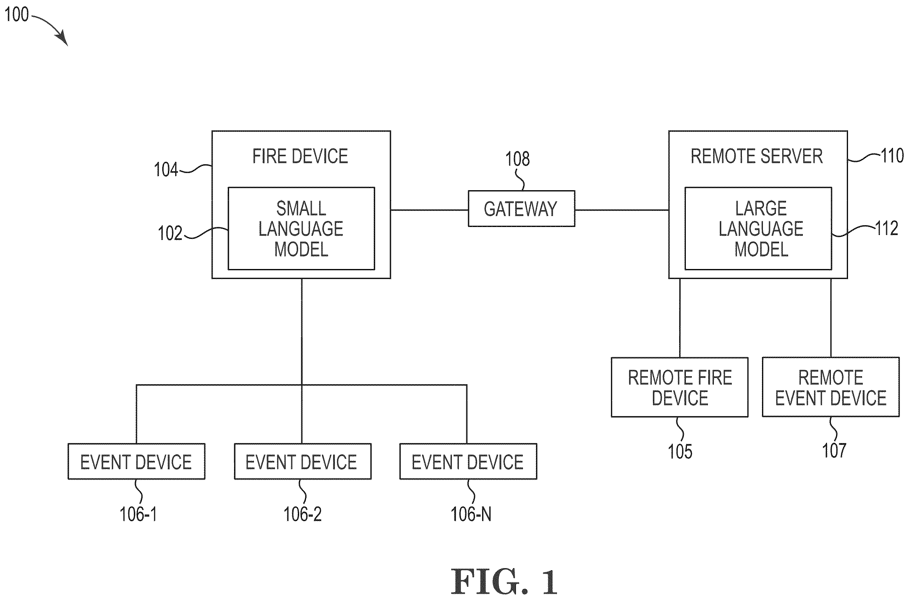

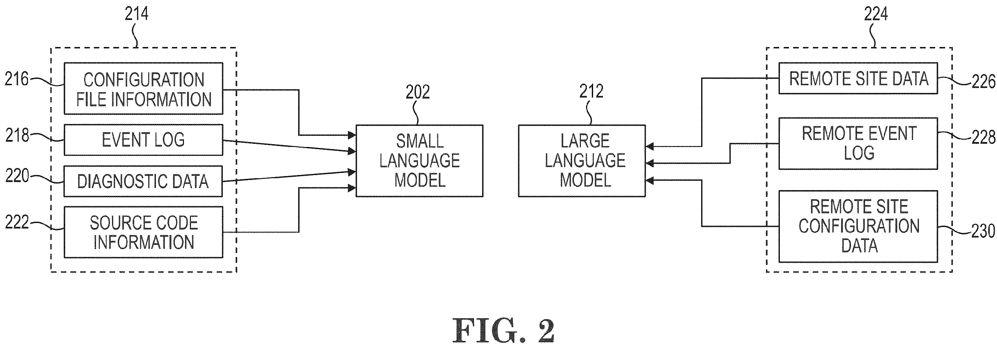

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for operational information from a fire device, in accordance with one or more embodiments of the disclosure. The system 100 can include a fire device 104, remote fire device 105, event devices 106-1, 106-2, 106-N (referred to collectively herein as event devices 106), remote event device 107, and remote server 110.

As mentioned above, the system 100 can be included in a facility, a space in a facility, etc. The system 100 can include a device/series of devices in order to detect events and/or process and/or analyze the detected events to determine whether to generate an alarm for occupants of the facility.

For example, the system 100 can include event devices 106. The event devices 106 can be devices to detect an event and transmit the detected event for processing and/or analysis. As mentioned above, the event devices 106 can include, for example, cameras, motion sensors, fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of event devices. Additionally, event devices 106 may also include self-test capabilities.

The system 100 can further include a fire device 104. In some examples, the fire device 104 can be a fire control panel. The fire device 104 can be utilized to control the various event devices 106 included in the system 100.

The fire device 104 can be connected to the event devices 106, transmit a plurality of commands to the event devices 106, and/or provide power to the event devices 106. The fire device 104 can apply a voltage to an event device loop in order to power event devices 106 on the event device loop. Such power can allow the event devices 106 to perform actions, such as communication between event devices 106 and the fire device 104, self-test procedures, and/or provide an audible and/or visible warning in an event, among other actions.

The fire device 104 may be further connected to a remote server 110 via a gateway 108. The gateway 108 can be a device (e.g., a building system gateway) that provides a communication link between the fire device 104 and other devices, such as the remote server 110. For example, the gateway 108 may enable transmission of data (e.g., system device data, activation signals, etc.) from the fire device 104 to the remote server 110 and vice versa. Communication between the fire device 104 and the remote server 110 is further described herein.

As mentioned above, a user may desire to determine information about the operation of the fire device 104. A user can input an input query to the fire device 104 for operational information of the fire device 104, as is further described herein, in order to determine operational information of the fire device 104. As used herein, a query refers to a question or command that can be received by a computing device, and the computing device can execute instructions to perform a computing task related to the question or command. A user can be, for instance, a customer, engineer, technical support, building operator, and/or any other type of user.

For example, the user may provide an input query to the fire device 104 in response to a fault occurring with an event device 106-1 associated with the fire device 104. The input query can be comprised of natural language. As used herein, the term "natural language" refers to a structured system of communication having grammar and vocabulary that occurs in a human community. For example, the user can provide an input query stating, "Diagnose a fault occurring with Event Device 106-1".

Although an input query is described above as being provided in response to a fault occurring with an event device 106-1, embodiments are not so limited. For example, the input query may be provided in order to generate a report, predict future faults, steps for commissioning a device, and/or may be provided for devices other than the event device 106-1 (e.g., event device 106-2, fire device 104, remote event devices, etc.).

In some examples, the input query may be provided directly to the fire device 104 via a user interface of a display (e.g., not illustrated in Figure 1 for clarity and so as not to obscure embodiments of the disclosure), via an input device associated with the fire device 104, etc. The user interface can provide (e.g., display and/or present) information to the user of the fire device 104, and/or receive information from (e.g., input by) the user of the fire device 104. In some embodiments, the user interface can be a graphical user interface (GUI) that can provide information to and/or receive information from the user of the fire device 104. The display can be, for instance, a touchscreen (e.g., the GUI can include touchscreen capabilities). Alternatively, a display can include a television, computer monitor, mobile device screen, other type of display device, or any combination thereof, connected to the fire device 104 and configured to receive a video signal output from the fire device 104.

In some examples, the input query may be provided by a mobile device (e.g., not illustrated in Figure 1 for clarity and so as not to obscure embodiments of the disclosure) connected to the fire device 104 via a wired and/or wireless network relationship. As used herein, a mobile device can include devices that are (or can be) carried and/or worn by the user. A mobile device can be a phone (e.g., a smart phone), a tablet, a personal digital assistant (PDA), smart glasses, and/or a wrist-worn device (e.g., a smart watch), among other types of mobile devices. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

Accordingly, the fire device 104 can receive the input query for operational information for the fire device 104. As used herein, operational information for a fire device refers to data describing actions carried out by a computing device to accomplish a given task. Operational information can include, for instance, operational parameters for the fire device 104 (e.g., memory consumption, temperature data of central processing unit (CPU), network packet transmission information (e.g., latency, bandwidth, etc.), operational parameters for connected event devices 106 (e.g., connection status, alarm status, device health, etc.), whether any faults are present in either the fire device 104 and/or associated event devices 106, installation and/or commissioning steps, among other types of operational information, as is further described herein.

In order to process the input query, the fire device 104 can provide the input query to a small language model 102 associated with the fire device 104 and trained to provide information about the fire device 104. As used herein, the term small language model refers to a lightweight generative artificial intelligence (AI) model configured to process inputs to generate an output. The small language model 102 can be a machine learning model that can generate text, images, videos, or other data utilizing generative models in response to a prompt, such as an input query. The small language model 102 can be trained utilizing local fire device operational data from the fire device 104, as is further described in connection with Figure 2.

The small language model 102 can be an artificial neural network (ANN). Artificial neural networks (ANNs) are networks that can process information by modeling a network of neurons. The network of neurons can be modeled in such a way so as to process information. For example, ANNs can include a multiple neuron topology, which can be referred to as artificial neurons or units. An ANN operation refers to an operation that processes inputs using units to perform a given task.

The ANN operation may involve applying various machine learning algorithms to process inputs. For example, the ANN can perform machine learning tasks by performing a weighted combination of inputs (either from a network input or a previous layer) at each unit to generate an output. The probability weight associations can be provided by a plurality of units that comprise the ANN. The units together with weights, biases, embeddings, and/or activation functions can be used to generate an output of the ANN based on the input to the ANN. Units of the ANN can be grouped to form layers of the ANN. The ANN can implement or represent an algorithm consisting of a series of connected layers that process signals based on outputs from other ones of the series of connected layers.

The small language model 102 can be a small language model based on the size of the model's neural network, the number of parameters the small language model uses to make a decision, and the volume of data the small language model 102 is trained on. For example, the small language model 102 can include less than 15 million parameters and can run on a CPU such as a 1,000 Megahertz (MHz) CPU, as compared with a large language model which may include more than 15 million parameters, (e.g., up to hundreds of billions of parameters) and may run on multiple graphics processing units (GPUs). Examples of small language models can include DistilBERT, Orca 2, Phi 2, BERT Mini/Small/Medium/Tiny, GPT-Neo, GPT-J, among other examples of small language models. The small language model 102 can be saved locally in the memory of the fire device 104 and can be a multimodal small language model.

The fire device 104 can provide the input query to the small language model 102. The fire device 104 can generate, using the small language model 102, a response to the input query including the operational information. For instance, the small language model 102 can utilize the various layers within the small language model 102 to process the input query by applying activation functions to inputs to layers of the small language model 102. The activation functions can transform the inputs to the layers into outputs that can be passed on to successive layers until the small language model 102 can ultimately generate a response to the input query including the operational information.

For example, the input query can be "Diagnose a fault occurring with Event Device 106-1", and the small language model 102 can process the input query to generate a response. The response to the input query can also be comprised of natural language. For example, the response to the input query can be, "The fault in Event Device 106-1 is occurring because of dust buildup on the device.". Accordingly, utilizing the trained small language model 102 the fire device 104 can receive an input query and cause a response to be provided to the user of the fire device 104.

While the input query is described above as being directed towards an event device 106-1 connected to the fire device 104, embodiments are not so limited. As the event devices 106 are connected to the fire device 104, they can be considered as local to the fire device 104. However, in some instances, the fire device 104 may receive an input query relating to a fire device or event device that is remote from the local group of the fire device 104 and event devices 106. Additionally, in some examples, the fire device 104 may utilize information associated with devices remote from the local group of the fire device 104 and event devices 106 to generate a response to an inquiry. Such examples are further described herein.

As illustrated in Figure 1, the fire device 104 can be connected to the remote server 110 via the gateway 108. In an instance in which the fire device 104 can utilize remote fire device operational data to generate a response to an inquiry about the fire device 104/event devices 106, or an inquiry about a remote fire device/remote event device, the fire device 104 can communicate with the remote server 110, as is further described herein.

In some instances, the fire device 104 can receive an input query about operational information for a device that is different from the fire device 104 and/or the event devices 106. For example, the fire device 104 can receive an input query about the remote event device 107. The input query can be "What is the alarm sensitivity setting for remote event device 107?" The fire device 104 can determine the input query is not associated with the fire device 104 or the event devices 106. Accordingly, the fire device 104 can transmit the input query, in response to the input query being about the device that is different from the fire device 104, to the remote server 110 having a large language model 112.

The large language model 112 can also be an ANN that operates similar to the small language model 102. However, the large language model 112 can be a deep learning machine learning algorithm trained with a larger data set than the small language model 102 and utilizing many more parameters than the small language model 102. For example, the large language model 112 may utilize billions of parameters in order to process the input query.

The remote server 110 can generate a response to the input query about the remote event device 107. For example, the remote server 110 can generate, using the large language model 112 trained utilizing remote fire device operational data, a response to the input query about the operational information for the device that is different from the fire device 104 and/or the event devices 106. For example, the response to the input query can include the sensitivity settings in natural language for the remote event device 107. The response can be transmitted, by the remote server 110 via the gateway 108, to the fire device 104.

As an additional example, the fire device 104 may utilize remote fire device operational data to generate a response to an inquiry about the fire device 104. For example, the fire device 104 may receive an update to the source code of the fire device 104, which may include a defect/bug. For example, the release version of the source code including the defect/bug may be version 12, but other fire devices (e.g., remote fire device 105) may be on version 11. Even though a user may not know the version number of the remote fire device 105, the user may input and the fire device 104 can receive an input query stating, "What is the cause of this bug in the fire device 104?"

In such an example, the fire device 104 may provide the input query to the small language model 102, as well as transmit the input query to the remote server 110. While the small language model 102 may be able to process the input query and generate a response indicating the reason for the bug (e.g., a defect in the source code update), the large language model 112 can also process the input query and generate a response indicating that the remote fire device 105 is on version 11 of the source code and is not experiencing any defects.

As mentioned above, the small language model 102 and the large language model 112 can be trained utilizing local fire device operational data and remote fire device operational data, respectively. The training data for the small language model 102 and the large language model 112 is further described in connection with Figure 2.

Figure 2 illustrates an example of training a small language model 202 and a large language model 212, in accordance with one or more embodiments of the disclosure. The small language model 202 may be included in a fire device, whereas the large language model 212 may be included in a remote server, as previously described in connection with Figure 1.

As previously described in connection with Figure 1, the small language model 202 can be a lightweight generative Al model trained to provide information about a fire device. The small language model 202 can be trained utilizing local fire device operational data 214 to generate a response to an input query, as is further described herein.

Local fire device operational data 214 can include data describing actions carried out by a fire device and/or an event device connected to the fire device in a local group. For example, the local fire device operational data 214 can include configuration file information 216, an event log 218, diagnostic data 220, and/or source code information 222, among other types of local fire device operational data 214, as is further described herein.

For example, the configuration file information 216 can include settings that dictate operation of a fire device and/or event device. For instance, the configuration file information 216 can include settings such as which output to activate based on a detector type (e.g., flashers, sounders, etc. based on a smoke, fire, CO₂, or other type of event device), or other cause and effect logical settings.

The event log 218 can include a record of abnormal situations that occur. For example, the event log 218 can include a record of an event device not working, a real alarm event, etc.

The diagnostic data 220 can include data utilized for the investigation and/or diagnosis of computing problems, such as performance, errors, erroneous outputs, etc. For example, the diagnostic data 220 can include memory consumption, temperature data of CPU, network traffic levels, etc.

The source code information 222 can include information describing the programming statements that instruct a device on how to perform particular tasks. For example, the source code information 222 can include version information, change logs, language type, as well as deviations in the operation of the device from the intended instruction (e.g., an alarm activation output is supposed to occur after 30 seconds but is happening after 2 minutes).

As illustrated in Figure 2, the local fire device operational data 214 can be provided to the small language model 202. The small language model 202 can be trained utilizing the local fire device operational data 214.

Additionally, as the fire device operates, the fire device can log additional local fire device operational data. This additional local fire device operational data may include additional configuration file information 216, event log 218, diagnostic data 220, source code information 222, as well as user generated feedback on the operation of the small language model 202. This additional local fire device operational data can be utilized to continuously retrain the small language model 202.

Similarly, the large language model 212 can be trained utilizing remote fire device operational data 224 to generate a response to an input query, as is further described herein.

Remote fire device operational data 224 can include data describing actions carried out by a fire device and/or an event device that is remotely located from the local group of the fire device and/or event device connected to the fire device in the local group. For example, the remote fire device operational data 224 can include remote site data 226, remote event logs 228, and/or remote site configuration data 230, as is further described herein.

For example, the remote site data 226 can include configuration file information, diagnostic data, and source code information for devices remote from the local fire device/event devices. Additionally, the remote event log 228 can include a record of abnormal situations that occur in these remote devices. Further, the remote site configuration data 230 can include control panel level data as well as site level data associated with the devices remote from the local fire device/event devices.

As illustrated in Figure 2, the remote fire device operational data 224 can be provided to the large language model 212. The large language model 212 can be trained utilizing the remote fire device operational data 224.

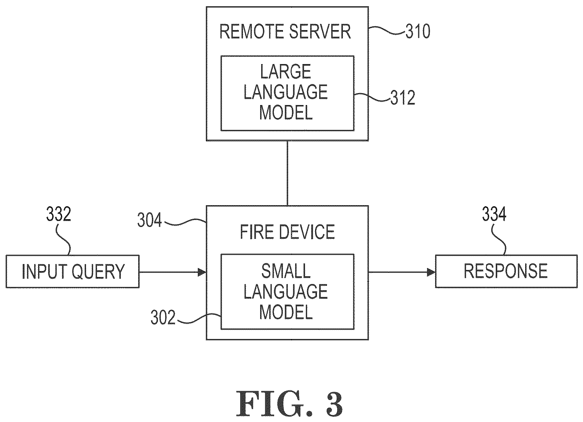

Figure 3 illustrates an example of an input query 332 being provided to a small language model 302 and/or a large language model 312, in accordance with one or more embodiments of the disclosure. The fire device 304 can receive the input query 332, and the small language model 302 and/or the large language model 312 at the remote server 310 can generate a response 334, as is further described herein.

For example, the input query 332 can include a request to generate a report detailing operational parameters for the fire device. The fire device 304 can determine the input query 332 is about the fire device 304. Accordingly, the fire device 304 can provide the input query 332 to the small language model 302. The small language model 302 can analyze local fire device operational data and determine various operational parameters for the fire device 304. For example, the various operational parameters can include memory consumption, temperature data of the CPU, network packet transmission information, operational parameters for connected event devices, whether any faults are present in the fire device and/or associated event devices, etc. The response 334 can include a report detailing the values of the operational parameters requested in the input query 332.

As another example, the input query 332 can include a request to diagnose a fault in an event device. The fire device 304 can determine whether the request is for an event device associated with the fire device, or for an event device that is remote from the fire device (e.g., not in the local group). In response to the request being for an event device associated with the fire device (e.g., being in the local group), the small language model 302 can determine a cause of the fault in the local event device. In response to the request being for a different event device (e.g., a remote event device), the fire device 304 can transmit the input query 332 to the remote server 310 and the large language model 312 can determine the cause of the fault in the remote event device. The response 334 can be transmitted from the remote server 310 to the fire device 304, and the fire device 304 can provide the response 334 that includes the cause of the fault.

As another example, the input query 332 can include a request to predict a future fault in an event device. The fire device 304 can determine whether the request is for an event device associated with the fire device, or for an event device that is remote from the fire device (e.g., not in the local group). In response to the request being for an event device associated with the fire device (e.g., being in the local group), the small language model 302 can predict a future fault in the local event device (e.g., including the type of fault, what can cause the future fault, a timeline as to when the future fault may occur, how to prevent the future fault, and/or how to remedy the future fault if/when it occurs). In response to the request being for a different event device (e.g., a remote event device), the fire device 304 can transmit the input query 332 to the remote server 310 and the large language model 312 can predict the future fault in the remote event device. The response 334 can be transmitted from the remote server 310 to the fire device 304, and the fire device 304 can provide the response 334 that includes the predicted future fault.

As another example, the input query 332 can include a request for steps to commission the fire device 304. The small language model 302 can analyze local fire device operational data and generate the response 334 including the steps for commissioning the fire device 304.

Accordingly, operational information of a fire device according to the disclosure can allow for an input query to be provided to a fire device, and the fire device can utilize a trained small language model to generate a response to the input query. The small language model can be more easily run locally on the fire device utilizing the available computing resources at the fire device as compared with a large language model. The user can, accordingly, more easily troubleshoot technical issues with the fire device. Additionally, the fire device can communicate with a remote server having a large language model that can allow for more robust responses to input queries utilizing connected systems. Accordingly, technical support time and efforts can be reduced as compared with previous approaches.

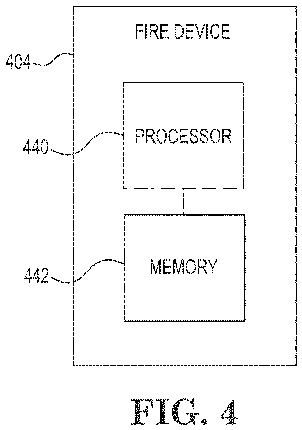

Figure 4 is an example of a fire device 404 for operational information from a fire device, in accordance with one or more embodiments of the disclosure. As illustrated in Figure 4, the fire device 404 can include a memory 442 and a processor 440 for operational information from a fire device, in accordance with the present disclosure.

The memory 442 can be any type of storage medium that can be accessed by the processor 440 to perform various examples of the present disclosure. For example, the memory 442 can be a non-transitory computer readable medium having computer readable instructions (e.g., executable instructions/computer program instructions) stored thereon that are executable by the processor 440 for operational information from a fire device in accordance with the present disclosure.

The memory 442 can be volatile or nonvolatile memory. The memory 442 can also be removable (e.g., portable) memory, or non-removable (e.g., internal) memory. For example, the memory 442 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 442 is illustrated as being located within fire device 404, embodiments of the present disclosure are not so limited. For example, memory 442 can also be located internal to another computing resource (e.g., enabling computer readable instructions to be downloaded over the Internet or another wired or wireless connection).

The processor 440 may be a central processing unit (CPU), a semiconductor-based microprocessor, and/or other hardware devices suitable for retrieval and execution of machine-readable instructions stored in the memory 442.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A fire device (104, 304, 404), comprising:
a memory (442); and
a processor (440) configured to execute executable instructions stored in the memory to:
receive an input query (332) for operational information for the fire device;
provide the input query (332) to a small language model (102, 202, 302) associated with the fire device (104, 304, 404) and trained to provide information about the fire device; and
generate, using the small language model (102, 202, 302), a response (334) to the input query (332) including the operational information.

2. The fire device (104, 304, 404) of claim 1, wherein the small language model (102, 202, 302) is trained utilizing local fire device operational data to generate the response (334) to the input query.

3. The fire device (104, 304, 404) of claim 2, wherein the local fire device operational data includes at least one of:
configuration file information (216);
an event log (218) for the fire device;
diagnostic data (220) for the fire device; and
source code information (222) for the fire device.

4. The fire device (104, 304, 404) of claim 1, wherein the input query (332) is comprised of natural language.

5. The fire device (104, 304, 404) of claim 1, wherein the response (334) to the input query (332) is comprised of natural language.

6. The fire device (104, 304, 404) of claim 1, wherein the small language model (102, 202, 302) is a multimodal small language model.

7. The fire device (104, 304, 404) of claim 1, wherein the small language model (102, 202, 302) is saved locally in the memory (442) of the fire device.

8. The fire device (104, 304, 404) of claim 1, wherein the fire device (104, 304, 404) is a fire control panel.

9. A method, comprising:
receiving, by a fire control panel (104, 304, 404), an input query (332) for operational information for the fire control panel (104, 304, 404);
providing, by the fire control panel (104, 304, 404), the input query (332) to a small language model (102, 202, 302) associated with the fire control panel (104, 304, 404) and trained utilizing local fire device operational data to provide information about the fire control panel (104, 304, 404), wherein the small language model (102, 202, 302) is saved locally at the fire control panel; and
generating, by the fire control panel using the small language model (102, 202, 302), a response (334) to the input query (332) including the operational information.

10. The method of claim 9, wherein the method further includes logging additional local fire device operational data.

11. The method of claim 10, wherein the method includes retraining the small language model (102, 202, 302) utilizing the additional local fire device operational data.

12. The method of claim 9, wherein the method further includes receiving an input query (332) about operational information for a fire device (104, 304, 404) that is different from the fire control panel (104, 304, 404).

13. The method of claim 12, wherein the method includes transmitting, by the fire control panel in response (334) to the input query (332) being about the fire device (104, 304, 404) that is different from the fire control panel, the input query (332) to a remote server (110, 310) having a large language model (112, 212, 312).

14. The method of claim 13, wherein the method includes generating, by the remote server (110, 310) using the large language model (112, 212, 312) trained utilizing remote fire device (104, 304, 404) operational data to provide information about fire devices in a fire system, a response (334) to the input query (332) about the operational information for the fire device (104, 304, 404) that is different from the fire control panel.

15. The method of claim 14, wherein the method includes transmitting, by the remote server, the response (334) to the fire control panel.
